# EUROPÄISCHE PATENTSCHRIFT

(11) **EP 0 998 848 B1**
(45) Veröffentlichungstag und Bekanntmachung des Hinweises auf die Patenterteilung: **28.08.2002**
(21) Anmeldenummer: 98121097.4
(22) Anmeldetag: 06.11.1998
(51) Int. Cl.: A01G 31/00

(54) **Pflanzsubstrat, insbesondere aus Naturfasern mit im wesentlichen anisotroper Faserlage**
Plant substrate, particularly made from natural fibres with substantially anisotropic fibre layers
Substrat de culture, notamment à base de fibres naturelles avec des couches de fibres essentiellement anisotropes

(43) Veröffentlichungstag der Anmeldung: 10.05.2000
(73) Patentinhaber: Innovation Pro Terra GmbH & CO. KG, 76316 Malsch (DE)
(72) Erfinder: Hohlbaum, Bernd Dr. Ing., 76337 Waldbronn (DE); Hofmann, Klaus, 97320 Albertshofen/Kitzingen (DE)

(56) Entgegenhaltungen:
- EP-A- 0 440 033
- EP-A- 0 620 965
- EP-A- 0 728 410
- DE-A- 4 234 737
- DE-A- 19 504 167
- DE-C- 4 416 528
- FR-A- 2 692 833

## Beschreibung

Aus den Anmeldungen DE 4416528 und DE 4446477 sind Pflanzsubstrate in Form von Vliesen bekannt, welche als Grundlage für die Aufzucht von Pflanzen geeignet sind.

Grundlage weiterer Anmeldungen, wie z.B. DE-U-8911056.0, DE 19504167, EP 0620965, DE 19523406, ist der Einsatz von genadelten und gepreßten Naturfasersubstraten mit progressivem und mehrschichtigem Aufbau.

Durch praktische Erfahrungen mit der Aufzucht von Pfanzen auf unterschiedlich geeigneten Pflanzsubstratstoffen, insbesondere auf Naturfaserbasis sind nun die natürlichen Grenzen der Möglichkeiten mit solchen Pflanzsubstraten ersichtlich geworden. Diese hängen zum einen mit dem Abbau der natürlichen Festigkeit, vorwiegend durch Feuchtigkeit, wie mit dem ab einem bestimmten Zeitraum, insbesondere bei direktem Kontakt mit Erde wohl unvermeidlichen Einsatz der natürlichen Verrottung zusammen. Primär limitierende Faktoren sind allerdings bei den bisher angebotenen Werkstoffen und Hinweisen für eine Gestaltung solcher vorgeschlagenen Fasersubstrate, deren fehlende Poren-Feuchtigkeitsspeicherfähigkeit, bedingt durch die zu hohen spezifische Gewichte wegen der überwiegend mechanischen Verfestigung solcher Produkte, die mangelhafte Feuchtigkeitstransportfähigkeit nach oben, vor allem aber die Probleme partieller Übersättigung von zugegebenen Düngemitteln an den nicht ausreichend durchlässigen Oberflächen oder der Grenzflächenproblematik zweier unterschiedlicher Schichten bei progressivem oder mehrschichtigem Aufbau. So sind beispielsweise auch bei den sonst wegen ihrer relativen Unempfindlichkeit gegenüber Feuchtigkeit gut geeigneten Kokosfasern wegen der großen durchschnittlichen Dicke (> 10 dtex) dieser Fasern bei vertretbarer Dichte von < 100 kg m³, aufgrund des damit im Vergleich zu Vliesen aus dünnen Fasern bei gleicher Vliesdichte immer zusammenhängenden größeren, mittleren Luftporenradius und des dann nur geringen Kapillarzugs und Feuchtigkeitstransportfähigkeit in Matten oder Formteilen, die Probleme nicht zu lösen gewesen.

Krempelvliese oder aerodynamisch gelegte Vliese aus den vom Markt angebotenen im Verhältnis zur Kokosfaser feinen Naturfasern, wie z.B. Flachs und Hanf, mit einer Durchschnittsfaserdicke von 1 - 7 dtex, sowie geschüttete Platten aus faserähnlichen Gebilden, erhalten üblicherweise für ihre Handhabbarkeit eine chemische, insbesondere aber eine mechanische Verdichtung durch Nadeln, Wasserstrahl oder Pressen und damit eine spezifische Dichte, die je nach eingesetztem Fasermaterial gewöhnlich zwischen 90 und 150 kg pro m³ liegt, bei einer dann maximal erreichbaren Schichtdicke, durch der überwiegend verwendeten Nadeltechnik von ca. 25 mm. Dabei werden die Fasergebilde, vorwiegend horizontal abgelegt und durch die Bearbeitung beim Vernadeln oder Verpressen in dieser Lage, wenn überhaupt kaum umgeordnet, so daß diese Vliese im wesentlichen eine horizontale Faserlage aufweisen, so daß, da Feuchtigkeitstransport immer entlang der Fasern verläuft, keine Höhendynamik entsteht. Flüssige oder feste Düngemittelbeigaben, z.B. der nahezu unvermeidliche Stickstoff, gewöhnlich von oben eingebracht, wird nun schon durch die starke Verdichtung, insbesondere aber durch die vorwiegend horizontal liegenden Fasern bei diesen hohen Raumgewichten teilweise herausgefiltert und lagert sich dabei nach und nach an der Oberfläche oder bei gewolltem oder wegen größerer Dicken notwendigen schichtigen auch unterschiedlichen von oben ggfs. durchlässigerem Aufbau, an den Grenzflächen zwischen den Schichten ab, was zu einer pflanzenschädlichen verstärkten Mineralisierung in diesem Bereich führt. Darüber hinaus unterbleibt bei solchen Faserformteilen, die üblicherweise Dicken vertikal zwischen 40 und 100 mm haben sollten, mit den dann vorwiegend horizontalen Fasern die gewünschte gleichmäßige flächige, durch stehende Fasern geregelte Dochtwirkung in vertikale Richtung, d.h. keine oder nur geringer Kapillarzug und Feuchtigkeitstransportfähigkeit in vertikaler Richtung innerhalb des ganzen Substratkörpers. Weiter sind in diesen Substraten, die je nach Pflanzentyp benötigten Freiräume für Luftversorgung und Wurzelentwicklung durch z.B. Fasermischungen mit Anteilen von dickeren Fasern, Distanzstrukturen wie Schäben, Abdeckungen und Zuschlagstoffen für die Feuchtigkeitsspeicherung und Feuchtigkeitsregulierung und die gesteuerte Wurzelbildung nicht gegeben.

Aufgabe der Erfindung war es nun ein geeignetes Pflanzsubstrat, in der bevorzugten Form auch für den biologischen Anbau, somit ohne synthetischen chemischen Produkte auskommend, für Nutz- wie Zierpflanzen, wie z.B. Gemüse, Salate, Schnittblumen, Pilze, Schnittgrün, Gräser, mit beliebiger, dem Produkt angepaßter Geometrie, auch für Höhen bis 150 mm zu finden, welches diese Fehler vermeidet, die natürliche Verrottungsfolgen konstruktiv verschieben kann, ggfs. auch bereits Transport oder Verpackungshilfe darstellt, komplett weitestgehend biologisch abbaubar ist, ggfls. durch Dämpfung oder ähnliche äußere Einwirkung entkeimt und dadurch mehrfach genutzt werden kann, und zumindest auch mit den eingebetteten Zuschlagstoffen nach Nutzung zur Bodenverbesserung durch Kompostierung geeignet ist. Im ungünstigsten Fall ist aber eine thermische Nutzung weitestgehend rückstandfrei anzustreben. Das Grundprinzip basiert hierbei im wesentlich auf einem Pflanzsubstrat poröser Struktur, auf oder in das ein oder mehrere Samenkörner, Keimlinge bzw. Pflanzen eingebracht werden. Die Nährstoffversorgung der Keimlinge erfolgt häufig durch eine Nährlösung, in die das Pflanzsubstrat teilweise oder ganz eingetaucht wird, oder über Tröpfchenbewässerung bzw. durch Anströmung. Das Pflanzsubstrat muß dabei drei Hauptanforderungen erfüllen: (1) ein hohes reversibles Flüssigkeitsspeichervermögen besitzen und (2) einen hohen Flüssigkeitstransport in Vertikal-Richtung ermöglichen und (3) jegliche Überwässerung von > 80 Vol % vermeiden.

Überraschend konnte diese Aufgabe nun durch, z.B., Faserblöcke, Fasermatten oder Faserformteile beliebiger Geometrie mit gleichgerichteter Faserorientierung in Vertikal-Richtung sowie über bestimmte Faserdicken und Dichten, die einen möglichst engen durchschnittlichen Luftporendurchmesser darstellen, gelöst werden. Damit der mittlere Luftporendurchmesser in etwa konstant bleibt müssen nun, je geringer die Dichte, um so feiner die Fasern sein; umgekehrt je dicker die Fasern, um so höher dann die Dichte wobei die Dickentoleranzen der eingesetzten Fasern möglichst eng gehalten werden sollten. Diese Faserstrukturen als Formteil oder Block, üblicherweise vertikal höher als 25 mm hergestellt, sind allein stehend oder für Aufnahmebehälter gestaltet, und werden wegen der angestrebten Raumgewichte, um eine optimale Feuchtkeitsführung, Feuchtigkeitspeicherung, Luftversorgung und Wurzelführung zu erzielen, aus Fasergebilden, vorwiegend feuchtigkeitsaufnehmenden Fasern und überwiegend von feinen Fasern < 7 dtex Dicke aus insbesondere nachwachsenden, häufig mit Verrottungshemmern ausgestatteten Rohstoffen, gestaltet, welche einmal ausreichend gewässert, ausreichende Restfeuchte zur Filmbildung an den Faseroberflächen besitzt um eine steuerbare vertikale Feuchtigkeitstransportfähigkeit herzustellen so daß das Risiko der Überwässerung, neben der Lösung bezüglich der Auswahl der Fasertypen, bezüglich der Dichte und der Formteilhöhe, auch schon durch arbeiten mit niedrigen Wasserspiegel in den Substrataufnahmebehältern oder bei Blöcken in den sogenannten Flutungssystemen begrenzt werden kann.

Hierbei ist zu beachten, daß das Flüssigkeitsspeichervermögen eines solchen Pflanzsubstrats sich somit zusammensetzt aus einem Anteil, der durch die makroskopischen Hohlräume bzw. Poren zwischen den Einzelfasern gebildet wird und einem Anteil, der sich aus der Feuchtigkeitsaufnahme der Einzelfasern selbst ergibt. Die bevorzugt, z.B. um die benötigte Luftversorgung sicherzustellen, eingesetzten Naturfasern enthalten dabei selbst bereits natürliche Spurenelemente, wie z.B. Phosphat, Kali und Magnesium, und können je nach Typ auch unterschiedliche Mengen Feuchtigkeit aufnehmen und speichern und diese zusammen mit Anteilen dieser Spurenelemente wieder abgeben, so daß damit allein je nach Pflanzentyp bereits eine Gestaltungsmöglichkeit, für Düngerbedarf oder Feuchtigkeitsbedarf, besteht.

Für ihre optimale Eignung müssen diese Formteilsubstrate, bereits ohne zusätzlich eingebrachte Feuchtigkeitsspeicher, bei einem Luftporenvolumen von normalerweise > 90 % eine Wasseraufnahmekapazität von mindestens 50 Vol % und ein nach der Wasseraufnahme verbleibendes Luftporenvolumen von > 10 Vol % dabei haben und werden aus beispielsweise Ramie, Hanf, Jute, Flachs, Viskose, allein oder aber aus Mischungen solcher Fasertypen gebildet, wie aber u.U. auch mit geringeren Anteilen von dickeren Fasern wie Kokos, Sisal, Miscanthus und dergleichen. Diese Fasergebilde sind innerhalb des Formteils in vertikaler Richtung in einer einheitlichen Schichtdicke ohne innere horizontale Grenzflächen, somit über das gewählte Volumen mit konstanter Dichte herzustellen, homogen, und was die Fasern betrifft, vorwiegend wegen des gewünschten und benötigten Kapillarzugs in Vertikal-Richtung und der damit gesteuerten guten Flüssigkeitstransportfähigkeit entlang der Fasern, vertikal zu strukturieren. Sie sind damit oben und unten offen durchgängig, steuerbar in einem Raumgewicht von 10 bis 90 kg. p. m³, bevorzugt zwischen 35 und 70 kg p. m³, in Abhängigkeit der Dichte zur gewählten Faserfeinheit, der gewünschten Feuchtigkeitsführung, (die Kapillarhebung bei gleichen Werkstoffen ist um so höher je kleiner der Luftporenradius ist) und der angestrebten Formteilhöhe, somit angepaßt dem gewünschten Luftporenradius durch Festkörperanteil und Luftanteil wie der Wurzelstruktur (Flach- Tiefwurzler) der anzubauenden Pflanzen, und werden durch geeignete Bindesysteme, z.B. Knochenleim, verfestigt. Um die Kapillarbildung herbeizuführen, sind z.B. die Fasersubstrate vor Nutzung zur Wasserfilmbildung an den Faseroberflächen für den dadurch erleichterten Kapillartransport ausreichend zu wässern um eine Mindestfeuchte in der Faserstruktur zu gewährleisten. Im Formteil bilden die, je nach benötigten Faserhöhenstransport gewählten, durch Faserfeinheit und Dichte entstandenen Hohlräume Distanzen zwischen den Fasern, somit ein System von näherungsweise parallelen kapillaren Strukturen zur optimierten flächigen Feuchtigkeitsführung in Vertikal-Richtung. Die durch diese Gestaltung an den unteren und oberen Oberflächen der Formteile bevorzugt endenden Naturfasern, unterstützen dabei sinnvoll durch ihre natürliche Eigenschaft beim Schneiden und noch mehr beim Reißen an ihren Endpunkten aufzusplitten und dabei veränderte Winkel zur senkrechte zu bilden, die ohnehin durch die vertikale Faserstruktur, die zerklüfteten Oberflächen der Naturfasern und die durch die Wässerung an die Oberfläche migrierenden Inhaltsstoffe schon erreichte gute Feuchtigkeitsanziehung im Fasersubstrat.

Die Flüssigkeitsspeicherung ergibt sich damit als Summe aus Speicherung in den nährungsweise parallelen kapillaren Hohlräumen des Formteils und in den Hohlräumen wie Substanzen der Einzelfasern. Aus der Theorie ist die Eigenschaft der nahezu reversiblen Feuchtigkeitsabgabe solcher paralleler Kapillarstrukturen bekannt, die sich positiv auf den vorgesehenen Anwendungsfall auswirkt. So konnte mit Flachsfasern von durchschnittlich 1 dtex, einer Dichte von 70 kg, problemlos eine Steighöhe von über 100 mm erreicht werden. Die Feuchtigkeitsaufnahme lag bei 70 Vol. %. Diese Feuchtigkeitsaufnahme ist jedoch jeweils bezogen auf die eingesetzten Faserqualitäten, Dichten und Höhen, insbesondere auch bei Oberflächenbehandelten Fasern, empirisch zu ermitteln wobei ein Sollwert von 40 - 80 Vol %, insbesondere aber um 60 Vol % für die meisten Pflanzen als Richtwert dienen sollte. Aus der Strömungslehre sind Formeln über die Kapillarhebung in kreisrunden Kapillaren wie auch solche für nicht kreisrunde in Näherung bekannt. Berücksichtigt wird dabei neben der mittleren Dichte des Haufwerks, die Dichte der Einzelfilamente und der Durchmesser der Einzelfilamente, die kapillare Steighöhe, die Oberflächenspannung der Flüssigkeit, der Randwinkel Flüssigkeit-Wand, der Radius der Kapillare, die Dichte der Flüssigkeit und die Erdbeschleunigung. Für die nicht kreisrunden kommt noch hinzu der hydraulische Radius, die Querschnittsfläche der nicht kreisrunden Kapillare und der Umfang der nicht kreisrunden Kapillare. Die Versuche mit unterschiedlichen Fasertypen, Formteildichten und Formteilhöhen haben gezeigt, daß im ungünstigsten Fall, z.B. bei nicht vollständiger Benetzung, der mittlere Porenradius < 200 Mikrometer, bevorzugt < 100, überwiegend < 70 Mikrometer sein sollte.

Eine Möglichkeit, diese für ein optimales Wachstum wünschenswerte Speicherfähigkeit bei diesen neu gefunden Faserstukturen noch zu verändern, bevorzugt auch z.B. bei dicken Wurzeln, besteht über vorwiegend unregelmäßig eingebrachte Distanzstrukturen, die teilweise auch natürliche Hydrospeichermaterialien darstellen, z.B. Schäben oder synthetische, z.B., Polyacrylamide, oder anorganische, z.B. Kalk. Solche Absorber können allerdings auch in Mehrkomponententfasern , z.B. fibrillierten, möglichst biologisch abbaubaren Folienfasern eingebunden und in das Pflanzsubstratformteil eingebracht werden, stellen aber wegen der zu diesen Feuchtigkeitsquellen einseitig hinwachsenden Wurzeln, insbesondere bei nicht gleichmäßiger Verteilung, ein Risiko dar.

So kann, z.B., abhängig für den ins Auge gefaßten Pflanzentyp durch empirische Versuche als optimal herausgefundenen Verhältnis von Dichte zur Formteilhöhe wie des Fasertyps, das benötigte Formteil aus einem über Krempel und Leger für eine Schichtdicke von 300 mm, in mehreren Lagen gleicher Art als Fasermatte abgelegt in einer Dichte von 45 - 50 kg m³, mit den üblicherweise bei dieser Herstellung horizontal liegenden Fasern als Vlies produziert werden, welches über, z.B. in kaltem Wasser nicht löslichen Dispersionen gebunden und auf diese Distanz fixiert ist. Aus diesem Vlies können dann durch Schneiden quer zur Laufrichtung bis zur maximalen Nutzbreite der Produktionsanlage Blöcke in beliebiger Höhe und durch drehen um 90 Grad solche von bis zu 300 mm Breite mit dann durch diese Drehung überwiegend vertikal orientierten Fasern gewonnen werden, wobei die Blöcke ggfs. noch mechanisch bearbeitet werden können. Daneben sind aber auch Verfestigungen mit Bindefasern aus thermoplastischen Fasern, z.B. PAN, möglichst aber solchen, die biologisch abbaubar sind, z.B. Copolyestern, sowie mit thermo- wie duroplastischen, natürlichen oder synthetischen Harzen, Thermoplasten, Biopolymeren, Wasserglas, Naturlatex, Cellulosediacetat, Stärke, Zuckerprodukten, Knochenleimen, wasserunlöslichen Bienenwachs und dergleichen denkbar. Gleiches gilt im übrigen auch für ein Verfahren zur Herstellung von Formteilen mittels Fluiden wie z.B. Luft und Wasser als Schütt- bzw. Anschwemmtechnik für Blöcke oder Formteile.

Alle diese Techniken haben zusätzlich den Vorteil, daß mit, insbesondere aber nach dem Bindemittel oder den Zuschlagstoffen regelmäßig auch Ausrüstungen, z.B. zur Steuerung des PH-Wertes, Duftstoffe, insbesondere aber Verrottungshemmer gegen Festigkeitsverlust der Faser, z.B. durch Gerbstoffe, Ligninerhöhung oder mit Wachsen, wie auch Pestizide, Bakterizide, Herbizide, Fungizide, Insektizide Mittel wie sie im Handel vielschichtig erhältlich sind, eingebracht werden können, selbst wenn Einzelfasergebilde bereits teilweise ausgerüstet sind.
Ähnliches gilt bei den Zuschlagstoffen für Absorber, wie z.B. Torfpartikel, Lehm, Stärke, Kollagen, Preßkuchen oder Gelantineprodukte, ggfs. aufschäumbaren, vorwiegend zur Verbesserung der Feuchtigkeitsspeicherung, welche möglichst gleichmäßig verteilt von den sich neu bildenden Wurzeln entdeckt und angezapft werden können, wie auch für natürliche oder erzeugbare Distanzstrukturen, wie z.B. Sonnenblumen- oder Holundermark, Faserpellets, Schäben, Sägemehl, beispielsweise zur Erleichterung der Wurzelbildung oder zur natürlichen Düngung wegen der darin enthaltenen Mineralien, um nur einige Gründe zu nennen, wie aber auch für weitere darstellbare Verrottungshemmeroder Beschleuniger, wiewohl dies, z.B., auch schon durch gezielte Faserauswahl aus dem breiten Spektrum des Marktes bereits gesteuert werden kann.

Durch das niedrige Raumgewicht und die entstandenen engen kapillaren Steigsysteme, vertikal ausgerichtet zwischen den Fasern und Zuschlagstoffen, kann so ein Formteil des weiteren bei der Fasersubstratherstellung und/oder nachträglich mit Schutzstoffen, wie z.B. Wasserglas, Ölderivaten, alkalischen Mitteln, transparenten und farbigen Lacken oder Pflanzenfirnissen besprüht, oder in solche getaucht werden, oder auch mit natürlichen fäulnisverhindernden Gerbstoffen, oder Extrakten aus Pflanzen, Blättern, Rinden, Samen und dergleichen, z.B. aus solchen vom Niembaum, oder synthetischen Reproduktionen solcher Produkte mit vergleichbarem Eigenschaftsprofil, wie auch aus einer Kombination von den angeführten Beispielen und Techniken behandelt werden.

Darüber hinaus ist zu beachten, daß der Kapillarzug und damit die Flüssigkeitstransportfähigkeit durch diese oder andere geeignete oberflächenaktive Beschichtungen bzw. Oberflächenbehandlungen der Fasern, welche die Grenzflächenspannung Flüssigkeit-Faser-Luft verändern, beinflußt werden kann.

Weitere Möglichkeiten, die natürliche Verrottbarkeit von Natursubstraten zu verbessern, liegen dabei beispielsweise auch an einer hydrothermischen Behandlung, um die Hemicellulose auszulösen, an einer Ozon, Plasma oder alkalischen Behandlung oder einer Bestrahlung mittels kurzwelliger UV Strahlen, um die wesentlichen zu benennen.

Diese Pflanzsubstrate sind fertig hergestellt dann geeignet nach den gängigen technischen Systemen Keimprodukte z.B. Samen oder auch Stecklinge, ergänzt ggfs. um geringe Mengen steriler Wachstumshilfen, z.B. Proteinstoffen inkl. farbigen Abdeckstoffen zur Verdunklung des Samens darin, an der Substratoberfläche oder in einem dafür vorgesehenen Aufnahmebereich aufzunehmen, um ein Anwurzeln zu erleichtern. Kleinformteile können nach Wurzelbildung, z.B., in die angepaßte Aushöhlung eines entsprechend größeren Substratformteils eingebettet oder aber auch einfach auf ein solches gestellt werden, damit die Wurzeln sich in dem weiteren entsprechend volumigeren Teil, evtl. auch einem anders gestalteten Pflanzsubstrat zur erweiterten Nährstoffaufnahme ausbreiten können.

Sinnvoll bei Formteilen ist u.U. auch mit Abdeckungen zu arbeiten, die, an einer oder mehreren Oberflächen neben einer, auch von der Farbe her steuerbaren, z.B., wachstumshemmend weiß oder wachstumsbeschleunigend schwarz, oder über, z.B., Lock- oder Abschreckfarben für Insekten, nach innen wie außen, gestaltbar sind. Diese Abdeckung kann, z.B., mit einem Schlauch zur Bewässerung und Düngung durchdringbar sein und soll an der Oberfläche dargestellt, z.B., Verdunstung vermeiden und die Wurzelbildung im oberen Bereich unterstützen oder Oberflächenspannungen verändern um die Kapillarwirkung zu verstärken, wie auch eine Umhüllung an den vertikalen Außenflächen denkbar ist, um auch dort Feuchtigkeitsverluste zu vermeiden und um den Wurzelbereich dunkel zu halten. Gleiches gilt auch für ein Einbringen in geformten dunkelwandigen Behältern, aus denen dann die Pflanzen mit ihren Substraten bei Erreichen einer bestimmten Wuchshöhe herausgenommen und versetzt werden können, wie für das Einbringen solcher Faserstrukturen in ein Wannen-, Folien- oder Behältersystem mit einem geschützten Feuchtbereich durch weitgehend abgeschlossene Raumkörper, die, in der Höhe z.B. zur Steuerung der Höhe des Wasserspiegels gestaltbar, nur für die Durchgänge der Be- und Abwässer durchlässig sind, und/oder an den Verbindungsstellen zwischen den kleineren und größeren Pflanzsubstratformteilen.

Um, z.B., die Bewässerung durch Flutungsbewässerung zu erleichtern, sollte insbesondere der Boden der Pflanzsubstratformteile zur Vergrößerung der Oberfläche dieses Formteils durch Sicken, Wellen und dergleichen strukturiert sein, was auch durch gängige mechanische Methoden machbar ist.

Als Matte, z.B., nach der sogenannten Strutotechnik mit überwiegend vertikal ausgerichteten Fasern dargestellt, kann dann so ein Pflanzsubstratformteil, z.B., ausgelegt auf einer leicht schiefen Ebene, durch das natürliche Gefälle von Feuchtigkeit und ggfs. zusätzlichen Nährstoffen durchdrungen werden.

Durch die gefundenen, vorwiegend in die Höhe leitenden Kapillareffekte ist dann bei den Pflanzsubstraten neben der notwendigen Luftversorgung der Wurzeln ein durch Auswahl der Fasertype, Dichte und Luftporendurchmesser steuerbarer sehr guter Transport des Wassers und evtl. Nährlösungen von der "Wanne" durch das ganze Pflanzsubstrat zu allen Wurzeln der Pflanze möglich, was für Gesundheit und Wachstum von Pflanzen von großer Bedeutung ist und jegliche schädliche Überwässerung vermeiden hilft.

## Patentansprüche

1. Pflanzsubstratformteil, überwiegend von Fasern gebildet, die länger als 15 mm sind und schlanker als 7 dtex, vorwiegend < 3 dtex, insbesondere aus nachwachsenden Rohstoffen, **gekennzeichnet dadurch, daß** die betreffenden Pflanzsubstratformteile bei Raumgewichten zwischen 10 und 100 kg pro m³, vorwiegend zwischen 35 und 70 kg pro m³ liegen, dargestellt in vertikaler Richtung in einer Schichtdicke mit einer konstanten Dichte über das Volumen, wobei die Fasergebilde dabei überwiegend vertikal orientiert sind mit möglichst engen, der Formteilhöhe durch Auswahl der Dichte und Faserdicke auch anpassbaren durchschnittlichen Luftporenradius von < 200 Mikrometer zur Bildung eines ausgeprägten Kapillarzugs mit guter Flüssigkeitstransportfähigkeit in Vertikal-Richtung, dabei durch thermische Verfestigung mit natürlichen organischen Bindemitteln auf Basis Proteinen, Tanninen, Ligninen, Kohlehydraten und/oder über Bindefasern und/oder andere thermo-, duroplastische oder lösliche Bindesysteme, oder einer Mischung daraus fixiert werden, und dabei bereits ohne zusätzlich eingebrachte Feuchtigkeitsabsorber aus der Summe der Speicherung in den kapillaren Hohlräumen des Formteils und in den Hohlräumen und Substanzen der Einzelfasern schon eine Feuchtigkeitsspeicherfähigkeit von > 40 Volumen Prozent und dabei eine Mindestluftspeicherkapazität von > 10 Vol % im Formkörper hat.

2. Pflanzsubstratformteil nach Anspruch 1, **gekennzeichnet dadurch, daß** es sich bei den nachwachsenden Rohstoffen, um Fasern aus z.B. Bast, Blatt, Samen, Früchten, Stengel, Holz und tierischen Produkten handelt oder aus Mischungen daraus.

3. Pflanzsubstratformteil nach Anspruch 1 und 2, **gekennzeichnet dadurch, daß** die eingesetzten Fasergebilde vor der Formteilebildung und/oder als Formteil beispielsweise Substanzen zur Verbesserung und/oder Steuerung der natürlichen Haltbarkeit gegenüber Verrottung, der Feuchtigkeit, der UV Stabilität, der Schimmelbildung, zur Bakterienabwehr, als Insekten Lock- oder Schreckfarben, zur Geruchsmodifizierung und dergleichen, allein oder in einer Kombination solcher Möglichkeiten, durch, z.B., hydrothermale Behandlung und/oder durch absorbierende- und/oder adsorbierende Mittel durch festes, flüssiges und/oder gasförmiges Einbringen, Einstreuen, Einschäumen, Besprühen, Tauchen in Ausrüstungsmittel und dergleichen ganz oder teilweise erhalten.

4. Pflanzsubstratformteil nach Anspruch 1 - 3, **gekennzeichnet dadurch, daß** zwischen den Fasern der Pflanzsubstratformteile Zuschlagstoffe wie Schäben, Sägespäne, Naturschäume, Holundermark, Kerne, Pulver, Stärke, Gelantineprodukte und dergleichen, allein oder in Mischungen davon, z.B., als Dünger oder Distanzgeber ausgelegt, enthalten sind.

5. Pflanzsubstratformteil nach Anspruch 1 - 4, **gekennzeichnet dadurch, daß** auf den Oberflächen der Faserstrukturen dieser Formteile Substanzen, wie z.B. Duftstoffe, Bakterizide, Herbizide, Fungizide, Pestizide, Stabilisitoren, Schutzstoffe und/oder Farbstoffe ganz oder in Teilbereichen enthalten sind.

6. Pflanzsubstratformteil nach Anspruch 1 - 5, **gekennzeichnet dadurch, daß** auf den Oberflächen der Einzelfasern dieser Formteile Beschichtungen bzw. Oberflächenbehandlungen aufgebracht sind, die die Grenzflächenbespannung Flüssigkeit-Faser-Luft verändern, und somit den Kapillarzug und die Flüssigkeittränsportfähigkeit beieinflussen.

7. Pflanzsubstratformteil nach Anspruch 1- 6, **gekennzeichnet dadurch, daß** das Formteil ganz oder in Teilbereichen mit einer Beschichtung und/oder fest verbunden oder lockeren Umhüllungen aus, z.B., Papier, Folien, Vliesen, Netzen, Geweben, Lacken, verformten Kunststoffteilen umgeben ist aus Naturprodukten oder synthetisch hergestellten Werkstoffen, welche ebenfalls Ausrüstungen der für die Pflanzsubstrate beschriebenen Gestaltungsarten ganz oder in Teilbereich enthalten können.

8. Pflanzsubstratformteile nach Anspruch 1 - 7, **gekennzeichnet dadurch, daß** an der Oberfläche Teilbereiche zur Aufnahme eines oder mehrerer entsprechend kleinerer Pflanzsubstratformteile ausgebildet sind.

9. Pflanzsubstratformteil nach Anspruch 1 - 8, **gekennzeichnet dadurch, daß** das Substrat an einer oder mehreren Seiten oder Oberflächen, regelmäßig und/oder unregelmäßig, durch Einschnitte, Sicken, Wellen und dergleichen und/oder Mischungen solcher Möglichkeiten, zusätzliche Strukturen erhält.

10. Planzsubstratformteil nach Anspruch 1- 9, **gekennzeichnet dadurch, daß** dieses Formteil auf und/oder in ein weiteres auch unterschiedlich großes Formteil nach einem der Ansprüche 1- 8 stellbar ist.

## Claims

1. Molded cultivation substrate article, mainly formed of fibers longer than 15 mm and thinner than 7 dtex, mainly < 3tdex, in particular from renewable raw materials, **characterized in that** the respective molded cultivation substrate articles have volume weights ranging from 10 to 100 kg per m³, mainly from 35 to 70 kg per m³, represented in the vertical direction, with a layer thickness with a constant thickness across the volume, the fiber structures being mainly vertically oriented with an average air void radius of < 200 µm which is as narrow as possible and can also be adapted to the height of the molded article by selecting the density and fiber thickness in order to form a marked capillary suction effect with a good liquid transportability in the vertical direction, and being fixed by means of thermal solidification with natural organic binders on the basis of proteins, tannins, lignins, carbohydrates and/or through binding fibers and/or other thermoplastic, duroplastic or soluble binding systems or a mixture thereof, and having, already without additionally included moisture absorbers, a moisture storability of > 40% by volume and a minimum air storage capacity of > 10% by volume in the molded body on the basis of the storage in the capillary cavities of the molded article and in the cavities and substances of the individual fibers.

2. Molded cultivation substrate article according to claim 1, **characterized in that** the renewable raw materials are fibers of e.g. bast, leaves, seeds, fruit, stalks, wood and animal products or mixtures thereof.

3. Molded cultivation substrate article according to claims 1 and 2, **characterized in that** the used fiber structures, prior to the formation of the molded articles and/or as a molded article, are provided, wholly or partly, e.g. with substances for improving and/or controlling the natural durability with respect to rotting, moisture, UV stability, mould formation, for the defense against bacteria, as attractant or repellent colors for insects, for smell modification and the like, alone or in a combination of such possibilities, e.g. by means of a hydrothermal treatment and/or by means of absorbing and/or adsorbing agents through solid, liquid and/or gaseous incorporation, interspersing, foaming spraying, dipping into finishing agents or the like.

4. Molded cultivation substrate article according to claims 1 to 3, **characterized in that** additives such as shives, sawdust, natural foams, elder pulp, pits, powder, starch, gelatin products and the like, alone or in mixtures thereof are contained, e.g. designed as fertilizer or spacers.

5. Molded cultivation substrate article according to claims 1 to 4, **characterized in that** substances such as aromas, bactericides, herbicides, fungicides, pesticides, stabilizers, protective materials and/or dyes are contained on all or partial portions of the surfaces of the fiber structures of the molded articles.

6. Molded cultivation substrate article according to claims 1 to 5, **characterized in that** coatings and/or surface treatments are applied onto the surfaces of the individual fibers which change the interfacial tension of liquid to fiber to air and thus influence the capillary suction effect and the liquid transportability.

7. Molded cultivation substrate article according to claims 1 to 6, **characterized in that** the molded article is wholly or partly firmly connected by a coating and/or surrounded by loose wrappings e.g. of paper, films, nonwoven fabrics, nets, fabrics, varnishes, shaped plastic parts, materials made from natural products or synthetic materials which may also wholly or in part contain finishes of the design types of the cultivation substrates.

8. Molded cultivation substrate article according to claims 1 to 7, **characterized in that** partial areas for receiving one or several molded cultivation substrate articles of a correspondingly smaller size are formed on the surface.

9. Molded cultivation substrate article according to claims 1 to 8, **characterized in that** the substrate receives additional structures on one or several sides or surfaces, in a regular or irregular fashion, by means of incisions, beads, waves and the like and/or mixtures of such possibilities.

10. Molded cultivation substrate article according to claims 1 to 9, **characterized in that** this molded article can be placed on and/or in a further molded article according to any of claims 1 to 8 which may be of a different size.

## Revendications

1. Pièce moulée en substrat pour plantes, constituée essentiellement de fibres plus longues que 15 mm et plus minces que 7 dtex, la plupart <3 dtex, en particulier en matières premières à croissance renouvelable, **caractérisée en ce que** les pièces moulées concernées en substrat pour plantes, pour des poids volumiques compris entre 10 et 100 kg par m³, essentiellement entre 35 et 70 kg par m³, représentées dans la direction verticale dans une épaisseur de couche ayant une densité constante dans tout le volume, les formations de fibres étant orientées surtout verticalement avec des diamètres moyens de pores aériens aussi étroits que possible, de <200 microns, et également adaptables à la hauteur de la pièce moulée par choix de la densité et de l'épaisseur de fibre, en vue de réaliser une tension capillaire prononcée avec de bonnes aptitudes de transport de liquide dans le sens vertical, et étant fixées ce faisant par consolidation thermique au moyen d'agglomérants à base de protéines, de tannins, de lignines, d'hydrates de carbone et/ou par des fibres de liaison et/ou d'autres systèmes de liaison thermoplastiques, thermodurcissables ou solubles, ou par un mélange de ces derniers, et a ce faisant d'emblée, sans adjonction supplémentaire d'absorbants d'humidité, de par la somme de l'accumulation dans les cavités capillaires de la pièce moulée et dans les cavités et dans la substance elle-même des différentes fibres, une capacité d'absorption de liquide de >40 pour 100 en volume et en même temps une capacité minimale d'absorption d'air de >10 pour 100 en volume.

2. Pièce moulée en substrat pour plantes selon la revendication 1, **caractérisée en ce que**, pour ce qui est des matières premières à croissance renouvelable, il s'agit de fibres, par exemple de liber, de feuilles, de graines, de fruits, de tiges, de bois et de produits animaux, ou d'un mélange de ces derniers.

3. Pièce moulée en substrat pour plantes selon les revendications 1 et 2, **caractérisée en ce qu'**avant la formation de la pièce moulée et/ou comme pièce moulée elle-même, les formations de fibres utilisées reçoivent complètement ou en partie, par exemple des substances pour améliorer et/ou conditionner la conservation naturelle vis-à-vis de la dégradation, l'humidité, la résistance aux UV, la formation de moisissure, pour la défense contre les bactéries, comme couleurs d'appât ou de dissuasion des insectes, pour changer l'odeur ou similaires, seules ou en une combinaison de telles possibilités, par exemple par traitement hydrothermique et/ou par des agents absorbants ou adsorbants, par introduction solide, liquide et/ou gazeuse, par épandage, par enrobage de mousse, par pulvérisation, par immersion dans des agents d'apprêtage ou similaire.

4. Pièce moulée en substrat pour plantes selon les revendications 1 à 3, **caractérisée en ce qu'**entre les fibres des pièces moulées en substrat pour plantes sont contenues des substances additionnelles, telles des débris et de la sciure de bois, des produits expansés naturels, de la moelle de sureau, des noyaux, de la poudre, de l'amidon, des produits de gélatine et similaires, seuls ou sous forme de mélanges, par exemple pour faire office de fertilisant ou d'intercalaire.

5. Pièce moulée en substrat pour plantes selon les revendications 1 à 4, **caractérisée en ce que** sur les surfaces de la texture fibreuse de ces pièces moulées, dans leur ensemble ou dans des parties de celle-ci, sont contenues des substances comme par exemple des produits odorants, des bactéricides, des fongicides, des pesticides, des stabilisateurs et/ou des colorants.

6. Pièce moulée en substrat pour plantes selon les revendications 1 à 5, **caractérisée en ce que** sur la surface des différentes fibres de ces pièces moulées sont appliqués des enduits ou des traitements de surface qui modifient les tensions interfaciales liquide-fibre-air, et influencent ainsi la tension capillaire et la capacité de transport du liquide.

7. Pièce moulée en substrat pour plantes selon les revendications 1 à 6, **caractérisée en ce que** la pièce moulée est entourée complètement ou en parties d'un enduit et/ou d'enveloppes solidaires ou détachées, par exemple en papier, en film, en non-tissé, en filet, en textile, en peinture, en pièces de plastique déformées, en matériaux naturels ou réalisés de synthèse, lesquels peuvent également contenir totalement ou en parties les apprêts décrits pour les modes d'aménagement du substrat pour plante.

8. Pièces moulées en substrat pour plantes selon les revendications 1 à 7, **caractérisées en ce qu'**à la surface, des zones partielles sont pratiquées pour recevoir une ou plusieurs pièces moulées en substrat pour plantes de taille plus petite en conséquence.

9. Pièce moulée en substrat pour plantes selon les revendications 1 à 8, **caractérisée en ce que**, sur une ou sur plusieurs faces ou surfaces, régulières ou irrégulières, le substrat est doté de structures supplémentaires par des incisions, des moulures, des vagues ou similaires et/ou par des mélanges de telles possibilités.

10. Pièce moulée en substrat pour plantes selon les revendications 1 à 9, **caractérisée en ce que** cette pièce moulée peut être placée sur et/ou dans une autre pièce moulée conforme à une des revendications 1 à 8, le cas échéant d'une taille différente.
